(19) Europäisches Patentamt
European Patent Office
Office européen des brevets

(11) **EP 1 055 799 B1**

(12) **EUROPÄISCHE PATENTSCHRIFT**

(45) Veröffentlichungstag und Bekanntmachung des Hinweises auf die Patenterteilung:
**01.12.2004 Patentblatt 2004/49**

(51) Int Cl.7: **F01C 1/16**, F01C 1/08, F04C 2/16, F04C 18/16

(21) Anmeldenummer: **00106785.9**

(22) Anmeldetag: **30.03.2000**

(54) **Verfahren zur Herstellung von Rotoren für Schraubenmaschinen**

Method of manufacturing of screw machine rotors

Procédé de fabrication de rotors à vis

(84) Benannte Vertragsstaaten:
**AT BE CH CY DE DK ES FI FR GB GR IE IT LI LU MC NL PT SE**

(30) Priorität: **28.05.1999 DE 19924616**

(43) Veröffentlichungstag der Anmeldung:
**29.11.2000 Patentblatt 2000/48**

(73) Patentinhaber: **Joh. Heinr. Bornemann GmbH**
**31683 Obernkirchen (DE)**

(72) Erfinder: **Hampel, Kurt**
**31683 Obernkirchen (DE)**

(74) Vertreter: **Gramm, Werner, Prof. Dipl.-Ing.**
**GRAMM, LINS & PARTNER GbR,**
**Theodor-Heuss-Strasse 1**
**38122 Braunschweig (DE)**

(56) Entgegenhaltungen:
DE-B- 1 119 082        FR-A- 631 175
GB-A- 740 607         US-A- 4 222 691

• **PATENT ABSTRACTS OF JAPAN vol. 1999, no. 01, 29. Januar 1999 (1999-01-29) & JP 10 286720 A (KASHIFUJI:KK;KOBE STEEL LTD), 27. Oktober 1998 (1998-10-27)**

**Beschreibung**

Die Erfindung betrifft ein Verfahren zur Herstellung von Rotoren für Schraubenmaschinen, insbesondere von Rotoren mit großer Gangtiefe und kleiner Steigung. Ein solches Herstellungsverfahren ist aus der US 4 222 691 und der GB 740 607 bekannt.

Auf dem Sektor der Arbeitsmaschinen ersetzen Schraubenmaschinen zunehmend die in vielen Bereichen bisher eingesetzten Hubkolben- oder Zahnradmaschinen. So ist der klassische Kolbenverdichter heute in der Industrie bereits nahezu vollständig durch Schraubenverdichter ersetzt; ähnlich verhält es sich mit Zahnrad-Schmierölpumpen in industriellen Anlagen, wo sich heute fast ausnahmslos Schraubenpumpen befinden.

Alle Schraubenmaschinen haben als Funktionselement einen Rotor, der in Verbindung mit einem oder mehreren Nebenrotoren und/oder dem umgebenden Gehäuse abgeschlossene Förderkammern bildet, in denen das Fördermedium von der Einlaß- zur Auslaßseite der Arbeitsmaschine transportiert wird. Die Herstellung derartiger Rotoren erfolgt bisher auf Fräs- oder Schleifmaschinen im Abwälzverfahren. Dieses Herstellverfahren hat sich technisch und kommerziell bewährt für Rotoren von Schraubenverdichtern oder auch Schmierölschraubenspindelpumpen, die große Gewindesteigung bei kleiner Gangtiefe aufweisen und in großen Stückzahlen hergestellt werden. Dabei ist für jede Rotorgeometrie (Durchmesser, Steigung, Profilform) ein entsprechendes Bearbeitungswerkzeug (Profilfräser oder Profilscheibe) erforderlich. Die hierdurch bedingten Werkzeugkosten und Rüstzeiten sind bei einer Serienfertigung akzeptabel.

Hingegen erweist sich das vorstehend erläuterte Verfahren bei der Herstellung von Rotoren mit großer Gangtiefe und kleiner Steigung, die für Sondermaschinen in Einzelanfertigung oder Kleinstserie hergestellt werden, aufgrund der Werkzeugkosten und Rüstzeiten als besonders kostenintensiv. Bei speziellen Flankenprofilen, wie sie für ein Förderschraubenpaar z. B. in der DE 42 24 969 C1 beschrieben sind, ist die technische Ausführbarkeit durch obiges Herstellverfahren erheblich eingeschränkt.

Der Erfindung liegt die Aufgabe zugrunde, ein kostengünstigeres Herstellverfahren für Rotoren von Schraubenmaschinen zu entwickeln und zwar insbesondere für Rotoren mit großer Gangtiefe und kleiner Steigung.

Diese Aufgabe wird erfindungsgemäß dadurch gelöst, daß die Profilgeometrie vollständig in einem räumlichen Stechdrehverfahren hergestellt wird, für das ein Stechwerkzeug zum Einstechen einer im Querschnitt rechteckigen Nut sowie je ein Sonderwerkzeug zur Formgebung der rechten und linken Profilflanke verwendet und in eine Aufnahmevorrichtung gespannt werden, die um eine der Werkstückachse des zu bearbeitenden Werkstücks im rechten Winkel schneidende Drehachse auf den mittleren Steigungswinkel des herzustellenden Rotorgangs eingestellt wird, worauf folgende Bearbeitungsschritte durchgeführt werden:

- im ersten Bearbeitungsschritt wird im wesentlichen in Profilmitte eine im wesentlichen rechteckige Nut mit dreiseitiger Bearbeitung eingestochen;

- in Folgeschritten wird diese Nut mit demselben Stechwerkzeug in dreiseitiger Bearbeitung radial tiefer gestochen, bis eine Nuttiefe von einigen Millimetern erreicht wird;

- es erfolgt dann die Formgebung der Profilflanken in zweiseitiger Bearbeitung mit den genannten Sonderwerkzeugen, für die die eingestochene Nut als Werkzeugauslauf dient;

- kurz bevor diese Profilgebung die zuvor erzeugte Nuttiefe erreicht, wird dieser Arbeitsschritt beendet und stattdessen mit Hilfe des Stechwerkzeuges die Nuttiefe vergrößert, wobei die zuvor ausgeformte Profilbreite nunmehr als Werkzeugauslauf für das Stechwerkzeug dient;

- die vorstehend genannten Verfahrensschritte werden so oft wiederholt, bis die gesamte Profilgeometrie schrittweise bis zu ihrem Profilgrund hergestellt ist.

Die Bearbeitungswerkzeuge für Rechtecknut sowie rechter und linker Profilflanke werden also vor Fertigungsbeginn auf den mittleren Steigungswinkel des Rotorgangs voreingestellt und zwar indem sie entweder in ihrer Aufnahmevorrichtung entsprechend gedreht oder aber zusammen mit der Aufnahmevorrichtung entsprechend eingestellt werden.

Eine weitere Erläuterung des erfindungsgemäßen Verfahrens enthält die nachfolgende Beschreibung eines Ausführungsbeispiels.

In der Zeichnung ist eine als Beispiel dienende Ausführungsform für die Anwendung bzw. Durchführung des erfindungsgemäßen Verfahrens schematisch dargestellt. Es zeigen:

Figur 1　in Seitenansicht einen nach dem erfindungsgemäßen Verfahren herzustellenden Rotor mit einer Werkzeug-Aufnahmevorrichtung;

Figur 2　den Rotor gemäß Figur 1 in Stirnansicht;

Figur 3　in vergrößertem Maßstab einen Längsschnitt durch einen Rotorgang mit der erfindungsgemäß herzustellenden Rotorgeometrie und

Figur 4　in schematischer Darstellung die nacheinander durchzuführenden Bearbeitungsschritte a - f zur Erzeugung der Rotorgeometrie gemäß Figur 3.

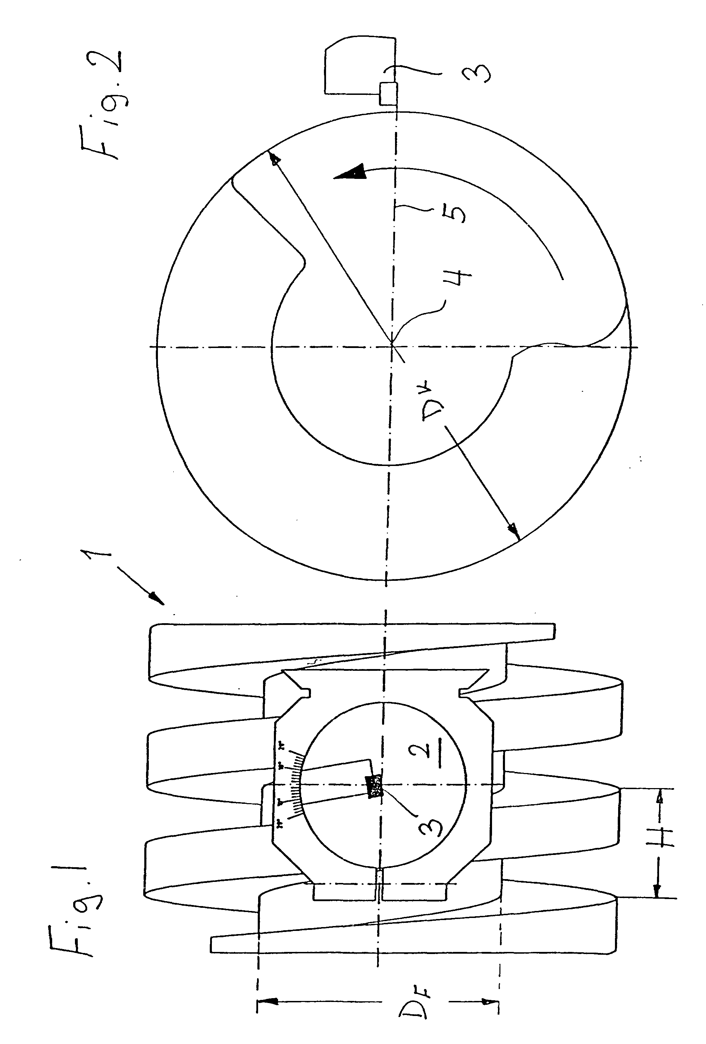

Figur 1 zeigt einen für eine Schraubenmaschine bestimmten Rotor 1 mit großer Gangtiefe und kleiner Steigung. Angedeutet ist ferner eine Aufnahmevorrichtung 2, in die zumindest eines der zur Herstellung der Rotorgeometrie benötigten Bearbeitungswerkzeuge 3 gespannt werden können. Die Aufnahmevorrichtung 2 ist um eine die Werkstückachse 4 des zu bearbeitenden Werkstücks im rechten Winkel schneidende Drehachse 5 verdreh- und feststellbar. In dem dargestellten Ausführungsbeispiel ist die Aufnahmevorrichtung 2 mit dem eingespannten und lediglich angedeuteten Bearbeitungswerkzeug 3 etwas um die Drehachse 5 verdreht, so daß das Bearbeitungswerkzeug 3 auf den mittleren Steigungswinkel φ des herzustellenden Rotorgangs eingestellt ist.

Der mittlere Steigungswinkel φ errechnet sich aus der Formel:

$$\tan\varphi = \frac{H}{\left(\dfrac{D_K + D_F}{2}\right)\Pi}$$

H = Rotorsteigung
$D_K$ = Kopfkreisdurchmesser des Rotors
$D_F$ = Fußkreisdurchmesser des Rotors

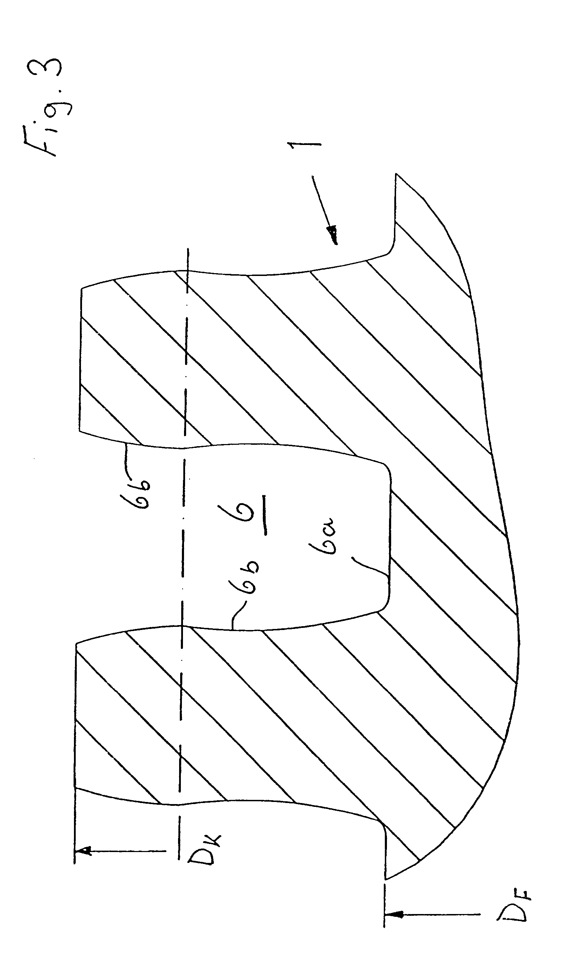

Figur 3 läßt die mit Hilfe des erfindungsgemäßen Verfahrens herzustellende Profilgeometrie 6 erkennen. Der Profilgrund ist mit dem Bezugszeichen 6a gekennzeichnet und definiert den Fußkreisdurchmesser $D_F$ des Rotors 1.

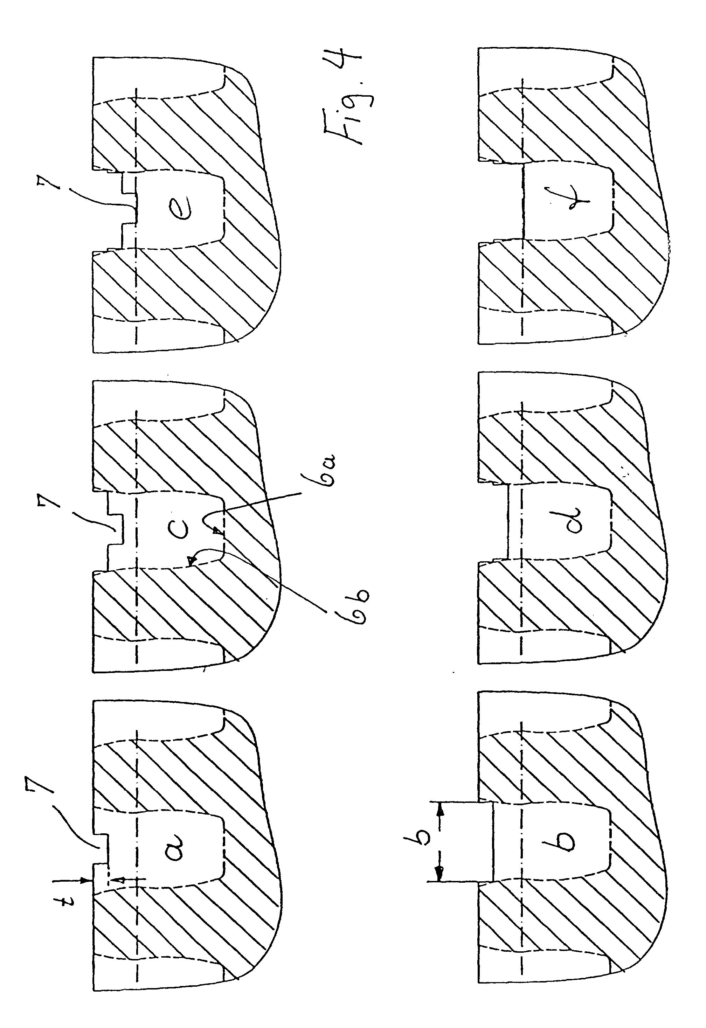

Figur 4 zeigt die aufeinanderfolgenden Bearbeitungsschritte zur Herstellung einer Profilgeometrie 6 gemäß Figur 3 in einem zylindrischen oder auch massiven Werkstück mit kreisrundem Querschnitt. Gemäß Figur 4a beginnt die Bearbeitung etwa in Profilmitte mit einer Rechtecknut 7, die in Schritten von wenigen Zehntel Millimetern mit dreiseitiger Bearbeitung mit Hilfe eines Stechwerkzeuges eingestochen wird, bis eine Tiefe von einigen Millimetern erreicht wird. Anschließend erfolgt dann die Formgebung der Profilflanken 6b in zweiseitiger Bearbeitung durch je ein Sonderwerkzeug für die rechte und linke Profilflanke. Hierbei dient die eingestochene Rechtecknut 7 als Werkzeugauslauf (siehe Figur 4b). Kurz bevor diese Profilgebung die zuvor erzeugte Nuttiefe t erreicht, wird dieser Arbeitsschritt beendet und stattdessen mit Hilfe des Stechwerkzeuges die Nuttiefe vergrößert bzw. in die nunmehr ausgeformte Profilbreite b neu eingearbeitet (siehe Figur 4c), wobei die zuvor ausgeformte Profilbreite b nunmehr als Werkzeugauslauf für das Stechwerkzeug dient. Diese Verfahrensschritte werden so oft wiederholt (Figur 4d, e, f), bis die gesamte, in Figur 3 dargestellte Profilgeometrie 6 schrittweise bis zu ihrem Profilgrund 6a hergestellt ist.

**Patentansprüche**

1. Verfahren zur Herstellung von Rotoren (1) für Schraubenmaschinen, insbesondere von Rotoren mit großer Gangtiefe und kleiner Steigung, **dadurch gekennzeichnet, daß** die Profilgeometrie (6) vollständig in einem räumlichen Stechdrehverfahren hergestellt wird, für das ein Stechwerkzeug zum Einstechen einer im Querschnitt rechteckigen Nut (7) sowie je ein Sonderwerkzeug zur Formgebung der rechten und linken Profilflanke (6b) verwendet und in eine Aufnahmevorrichtung (2) gespannt werden, die um eine der Werkstückachse (4) des zu bearbeitenden Werkstücks im rechten Winkel schneidende Drehachse (5) auf den mittleren Steigungswinkel (φ) des herzustellenden Rotorgangs eingestellt wird, worauf folgende Bearbeitungsschritte durchgeführt werden:

   - im ersten Bearbeitungsschritt wird im wesentlichen in Profilmitte eine im wesentlichen rechteckige Nut (7) mit dreiseitiger Bearbeitung eingestochen;

   - in Folgeschritten wird diese Nut (7) mit demselben Stechwerkzeug in dreiseitiger Bearbeitung radial tiefer gestochen, bis eine Nuttiefe (t) von einigen Millimetern erreicht wird;

   - es erfolgt dann die Formgebung der Profilflanken (6b) in zweiseitiger Bearbeitung mit den genannten Sonderwerkzeugen, für die die eingestochene Nut (7) als Werkzeugauslauf dient;

   - kurz bevor diese Profilgebung die zuvor erzeugte Nuttiefe (t) erreicht, wird dieser Arbeitsschritt beendet und stattdessen mit Hilfe des Stechwerkzeuges die Nuttiefe vergrößert, wobei die zuvor ausgeformte Profilbreite (b) nunmehr als Werkzeugauslauf für das Stechwerkzeug dient;

   - die vorstehend genannten Verfahrensschritte werden so oft wiederholt, bis die gesamte Profilgeometrie (6) schrittweise bis zu ihrem Profilgrund (6a) hergestellt ist.

**Claims**

1. Method of producing rotors (1) for screw-type machines, in particular rotors having a large thread turn depth and small pitch, **characterized in that** the profile geometry (6) is produced completely in a three-dimensional recessing process, for which a recessing tool is used for recessing a groove (7) of rectangular cross section and a respective special tool is used for shaping the right-hand and the left-hand profile flank (6b), the said tools being clamped in a locating fixture (2) which is set to the average helix angle (φ) of the rotor thread turn to be produced about a rotation axis (5) intersecting at right angles the workpiece axis (4) of the workpiece to be machined, whereupon the following machining steps are carried out:

- in the first machining step, an essentially rectangular groove (7) is recessed essentially in the profile centre by three-sided machining;
- in subsequent steps, this groove (7) is recessed radially deeper with the same recessing tool by three-sided machining until a groove depth (t) of a few millimetres is achieved;
- this is followed by the shaping of the profile flanks (6b) by two-sided machining with the said special tools, for which the recessed groove (7) serves as tool runout;
- just before this profiling reaches the groove depth (t) produced beforehand, this processing step is ended and the groove depth is instead increased by means of the recessing tool, the profile width (b) shaped beforehand now serving as tool runout for the recessing tool;
- the aforesaid method steps are repeated until the entire profile geometry (6) has been produced step by step down to its profile root (6a).

**Revendications**

1. Procédé de fabrication de rotors (1) pour machines à vis, en particulier de rotors à grande profondeur de filet et faible pente, **caractérisé en ce que** l'on fabrique entièrement la géométrie du profil (6) par un perçage rotatif spatial, pour lequel on utilise un outil de perçage pour pratiquer une rainure (7) de section transversale rectangulaire ainsi qu'un outil spécial respectif pour le formage de chacun des flancs de profil (6b) droit et gauche, et on bride ces outils dans un dispositif récepteur que l'on règle à l'angle de pente moyen (φ) du filet rotorique à réaliser, réglage que l'on effectue autour d'un axe de rotation (5) coupant à angle droit l'axe (4) de la pièce à usiner, après quoi on exécute les étapes d'usinage suivantes :

- dans une première étape d'usinage on perce sensiblement en milieu de profil une rainure sensiblement rectangulaire (7) par usinage trilatéral ;

- dans des étapes successives on perce radialement plus profondément cette rainure (7) avec le même outil de perçage en usinage trilatéral, jusqu'à atteindre une profondeur (t) de quelques millimètres pour la rainure ;
- on procède ensuite au formage des flancs (6b) du profil en usinage bilatéral avec les outils spéciaux précités, la rainure percée (7) servant de sortie d'outil ;
- juste avant que ce profilage atteigne la profondeur (t) précédemment donnée à la rainure, on met fin à cette étape de travail et au lieu de cela on agrandit la profondeur de la rainure à l'aide de l'outil de perçage, la largeur de profil (b) précédemment excavée servant désormais de sortie d'outil pour l'outil de perçage ;
- les étapes précitées sont réitérées jusqu'à ce que la totalité de la géométrie (6) du profil soit réalisée par pas jusqu'au fond (6a) du profil.

Fig.1

1

$D_F$

3    2

H

Fig.2

$D_K$

4    5

3

EP 1 055 799 B1

Fig. 3

EP 1 055 799 B1

Fig. 4